# EUROPÄISCHE PATENTSCHRIFT

(11) **EP 0 472 823 B1**
(45) Veröffentlichungstag und Bekanntmachung des Hinweises auf die Patenterteilung: **14.12.1994**
(21) Anmeldenummer: 91108396.2
(22) Anmeldetag: 24.05.1991
(51) Int. Cl.: B60G 15/07, F16F 1/38

(54) **Elastisches Dämpferlager**
Elastic shock-absorbing mounting
Fixation élastique d'amortissement

(30) Priorität: 03.08.1990 DE 4024696
(43) Veröffentlichungstag der Anmeldung: 04.03.1992
(73) Patentinhaber: Boge GmbH, D-53783 Eitorf (DE)
(72) Erfinder: Gäb, Gerd, W-5483 Bad Neuenahr-Ahrweiler 12 (DE)

(56) Entgegenhaltungen:
- EP-A- 0 049 336
- DE-U- 1 935 286
- DE-U- 1 979 490
- DE-U- 1 983 947
- DE-U- 7 246 448
- FR-A- 2 287 355
- US-A- 2 122 839

## Beschreibung

Die Erfindung bezieht sich auf elastisches Dämpferlager für die Befestigung eines aus einem Teleskop-Schwingungsdämpfer und einer Schraubenfeder bestehenden Federbeines an der Karosserie eines Fahrzeuges, mit einem an der Karosserie befestigten Ringflansch, der ein, mit einer Innen- und Außenbüchse versehenes, elastisches Lager zur Befestigung einer Kolbenstange eines Teleskop-Schwingungsdämpfer trägt und wobei die Kolbenstange eine, mit dem elastischen Lager zusammenarbeitende Anschlagscheibe aufweist, wobei die Außenbüchse eine radial in den Elastomerkörper des elastischen Lagers hineinragende Sicke aufweist, das elastische Lager auf der, zwischen der Sicke und der Anschlagscheibe angeordnete Stirnseite einen als Anschlag ausgebildeten Wulst aufweist und der Elastomerkörper an der Innenbüchse anvulkanisiert ist.

Dämpferlager dieser Art sind bereits bekannt (z.B. EP-A 0.049.336), bei denen eine Innenhülse und eine diese umgebende Gummibüchse die Kolbenstange eines Teleskop-Schwingungsdämpfers halten. Das elastische Lager wird fest in einem die Hülse umgebenden Element gehalten, welches seinerseits im Fahrzeugradgehäuse befestigt ist. Die Unterseite der Büchse schafft einen Sitz für eine Federaufhängung. Eine Anschlagscheibe mit einem Gummiwulst wird fest gegen den oberen Rand der inneren Hülse gehalten. Darüber hinaus ist der Ringflansch mit einer doppelt konischen Kontur versehen und im Gummilager eingeknüpft. Eine derartige konische Kontur kann keine Axialkräfte bei Zug- und Druckbelastung auffangen, zumal die Bauteile nicht fest miteinander verbunden sind.

Aufgabe der Erfindung ist es, ein Dämpferlager zu schaffen, welches geometrisch günstig und dadurch einfach herstellbar und mit einem integrierten, axialen Anschlag versehen ist, so daß für den Elastomerkörper eine einfache Geometrie und ein einziger Werkstoff notwendig ist.

Diese Aufgabe wird erfindungsgemäß dadurch gelöst, daß der Elastomerkörper an der Außenbüchse anvulkanisiert ist, wobei die Sicke in etwa rechtwinkelig zur Längsachse des elastischen Lagers verläuft.

Vorteilhaft ist bei dieser Ausführung, daß nur durch die in etwa rechtwinkelig verlaufende Sicke und den Elastomerkörper ein Anschlag in Axialrichtung erzeugt wird. Dieser als Wulst ausgebildete Anschlag ist dabei Bestandteil des Elastomerkörpers, so daß das elastische Lager nicht nur der Lagerung der Kolbenstange sondern gleichzeitig noch als Zuganschlag in Axialrichtung dient.

Nach einem weiteren wesentlichen Merkmal ist als Elastomer Gummi vorgesehen.

Die Erfindung wird nachstehend an Hand eines in der Zeichnung schematisch dargestellten Ausführungsbeispieles näher erläutert.

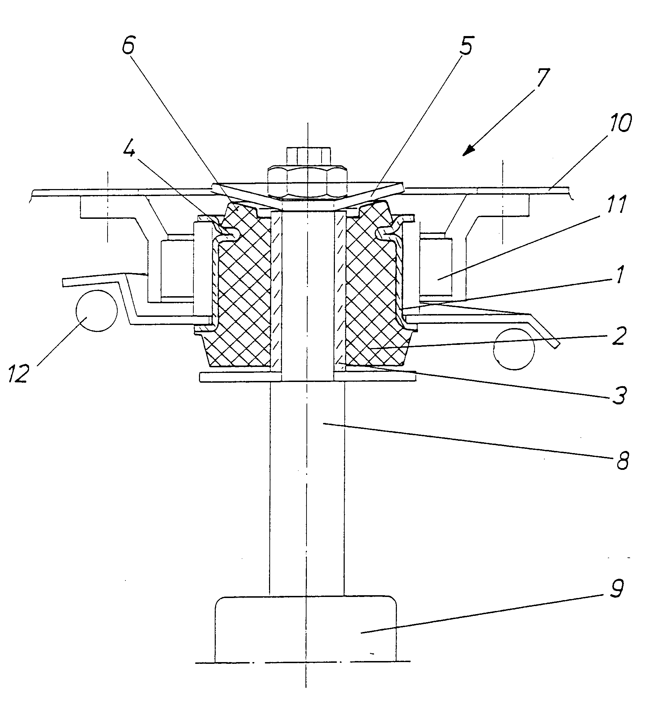

Die Figur 1 zeigt ein elastisches Dämpferlager 7, welches der Lagerung einer Kolbenstange 8 eines Teleskop-Schwingungsdämpfers 9 an der Karosserie 10 eines Fahrzeuges dient.

Das elastische Dämpferlager 7 besteht im wesentlichen aus der Außenbüchse 1, der Innenbüchse 3 sowie dem dazwischen angeordneten elastischen Lager 2. Die auf der Kolbenstange befestigte Anschlagscheibe 5 bildet zusammen mit dem Wulst 6 des elastischen Lagers 2 einen axialen Zuganschlag. Bei einer axialen Druckbeaufschlagung des Wulstes 6 durch die Anschlagscheibe 5 stützt sich der obere Teil des elastischen Lagers an der Sicke 4 ab.

## Patentansprüche

1. Elastisches Dämpferlager für die Befestigung eines aus einem Teleskop-Schwingungsdämpfer (9) und einer Schraubenfeder (12) bestehenden Federbeines an der Karosserie eines Fahrzeuges, mit einem an der Karosserie befestigten Ringflansch, der ein, mit einer Innen- (3) und Außenbüchse (1) versehenes, elastisches Lager (2) zur Befestigung einer Kolbenstange (8) eines Teleskop-Schwingungsdämpfer (9) trägt und wobei die Kolbenstange (8) eine, mit dem elastischen Lager (2) zusammenarbeitende Anschlagscheibe (5) aufweist, wobei die Außenbüchse (1) eine radial in den Elastomerkörper des elastischen Lagers (2) hineinragende Sicke (4) aufweist, das elastische Lager (2) auf der, zwischen der Sicke (4) und der Anschlagscheibe (5) angeordnete Stirnseite einen als Anschlag ausgebildeten Wulst (6) aufweist und der Elastomerkörper an der Innenbüchse (3) anvulkanisiert ist,
dadurch gekennzeichnet,
daß der Elastomerkörper an der Außenbüchse (1) anvulkanisiert ist, wobei die Sicke (4) in etwa rechtwinkelig zur Längsachse des elastischen Lagers (2) verläuft.

2. Dämpferlager nach Anspruch 1,
dadurch gekennzeichnet,
daß als Elastomer Gummi vorgesehen ist.

## Claims

1. Elastic shock-absorbing mounting for the anchorage of a shock-absorbing strut comprising a telescopic shock-absorber (9) and a coil spring (12) to the chassis of a vehicle, with a ring flange attached to the chassis, which carries an elastic mounting (2) provided with an inner sleeve (3) and an outer sleeve (1) for the anchorage to a piston rod (8) of a telescopic shock-absorber (9), and in which the piston rod (8) has an abutment disc (5) co-operating with the elastic mounting (2), of which the outer sleeve (1) has a crease (4) projecting radially into the elastomeric body of the elastic mounting (2), the elastic mounting (2) has on its face disposed between the crease (4) and the abutment disc (5) a bead formed as a stop, and the elastomeric body is pre-vulcanised to the inner sleeve (3), characterised in that
the elastomeric body is pre-vulcanised to the outer sleeve (1) and the the crease (4) runs substantially at right angles to the longitudinal axis of the elastic mounting (2).

2. Shock-absorbing mounting according to claim 1,
characterised in that,
rubber is provided as the elastomer.

## Revendications

1. Support d'amortisseur élastique pour la fixation sur la carrosserie d'un véhicule d'un montant de force à ressort constitué par un amortisseur télescopique (9) de vibrations et d'un ressort cylindrique (12), comportant une bride annulaire fixée sur la carrosserie, qui porte un support élastique (2) pourvu de manchons intérieur (3) et extérieur (1) pour la fixation d'une tige de piston (8) d'un amortisseur télescopique (9) de vibrations, la tige de piston (8) présentant un disque de butée (5) coopérant avec le support élastique, le manchon extérieur (1) présentant une moulure (4) faisant saillie radialement dans le corps élastomère du support élastique (2), le support élastique (2) présentant un bourrelet (6) réalisé comme butée sur la face frontale agencée entre la moulure (4) et le disque de butée (5), et le corps élastomère étant vulcanisé sur le manchon intérieur (3), caractérisé en ce que le corps élastomère est vulcanisé sur le manchon extérieur (1), la moulure (4) s'étendant approximativement perpendiculairement à l'axe longitudinal du support (2) élastique.

2. Support d'amortisseur selon la revendication 1, caractérisé en ce que l'élastomère prévu est du caoutchouc.
